# EUROPEAN PATENT APPLICATION

(11) **EP 1 103 741 A2**
(43) Date of publication of application: **30.05.2001**
(21) Application number: 00310317.3
(22) Date of filing: 21.11.2000
(51) Int. Cl.: F16H 57/00

(54) **Drive gear train**

(30) Priority: 29.11.1999 GB 9927974
(71) Applicant: Knorr-Bremse Systems for Commercial Vehicles Limited, Kingswood, Bristol BS15 2NL (GB)
(72) Inventor: Lippiatt, Alan Sydney, Bath BA2 4QB (GB); Nation, Toby James, Rugby, Wawickshire CV22 5EL (GB)
(74) Representative: Turner, Alan Reginald

(57) **Abstract**

A mechanical drive gear train (2) especially of a single cylinder gas compressor (3) mounted on an internal combustion engine (1), includes at least one gear wheel which comprises two sections (11,14) with corresponding gear teeth (lla,llb) and which are rotatable together having biasing means which urges the teeth (llb) of one section out of alignment with the teeth of the other section (lla) to reduce play relative to teeth of the next cooperating gear wheel the biasing means comprising an enclosure (16a) formed between walls of the sections and a passage (13a) thereto via which in operation fluid under pressure from a lubrication oil source (13) is applied between said walls, the arrangement being such as to limit gear train noise due to cyclic compressor torque reversal.

## Description

This invention relates to drive gear train especially a drive gear train for a gas compressor.

Engine driven piston and cylinder gas compressors are widely employed in commercial vehicles to provide compressed air for charging the reservoirs of pneumatic systems, especially wheel suspensions and brakes. Such compressors are most commonly driven directly by the respective vehicle engine through suitable gear trains and such gear trains are largely very reliable. However, particularly but not exclusively where used to drive a single cylinder gas compressor, play in such a gear train can result in undesired mechanical noise arising from the known torque reversal which occurs following completion of each compression stroke of the respective compressor piston.

Various proposals have been made for modifying such compressors to counteract such noise. For example a valve has been proposed which releases compression chamber pressure in the region of the point of maximum compression to reduce the subsequent torque reversal. Such proposals appear for example in prior published U.K. Patent Specification 2158888 or European Patent Specification 0293213, but such valves can be very detrimental to compressor efficiency.

A further proposal has been made in U.K. Patent Specification No. 2198792 which proposed inserting a undirectional transmission device between the drive train to a compressor and the compressor itself. However such devices have been shown to have insufficient durability for such use with automotive gas compressors.

The object of the present invention is to meet a requirement for a drive gear to a compressor which emits reduced noise resulting from play in a gear train.

According to the present invention there is provided a reciprocating gas compressor, a mechanical drive gear train between the engine and the compressor including a gear wheel having two sections with corresponding gear teeth and being rotatable together about a common axis, biasing means operable to act between said sections in a sense to urge the teeth of one section out of circumferential alignment with the teeth of the other section to reduce play relative to a cooperating gear wheel meshing therewith characterised in that said biasing means comprises an enclosure formed between walls of said sections and a passage leading to said enclosure via which in operation fluid under pressure is applied to said enclosure.

In the case of a plain gear wheel said biasing means comprises means causing relative rotational movement between the sections whereas in the case of an helical gear wheel relative axial and/or rotational movement may be provided for.

In order that the invention may be clearly understood and readily carried into effect the same will be further described by way of example with reference to the accompanying drawings of which:-
- Fig. 1: illustrates in blocks an internal combustion engine with a mechanical gear train drive to an air compressor.
- Fig. 2: illustrates in diagrammatic manner a single plain gear wheel for a gear train according to one embodiment of the invention
- Fig. 3: illustrates a view of gear wheel corresponding teeth of the plain gear wheel of Fig. 2 and
- Fig. 4: similarly illustrates a view of a gear wheel corresponding teeth of an alternative helical toothed gear wheel for such a drive train

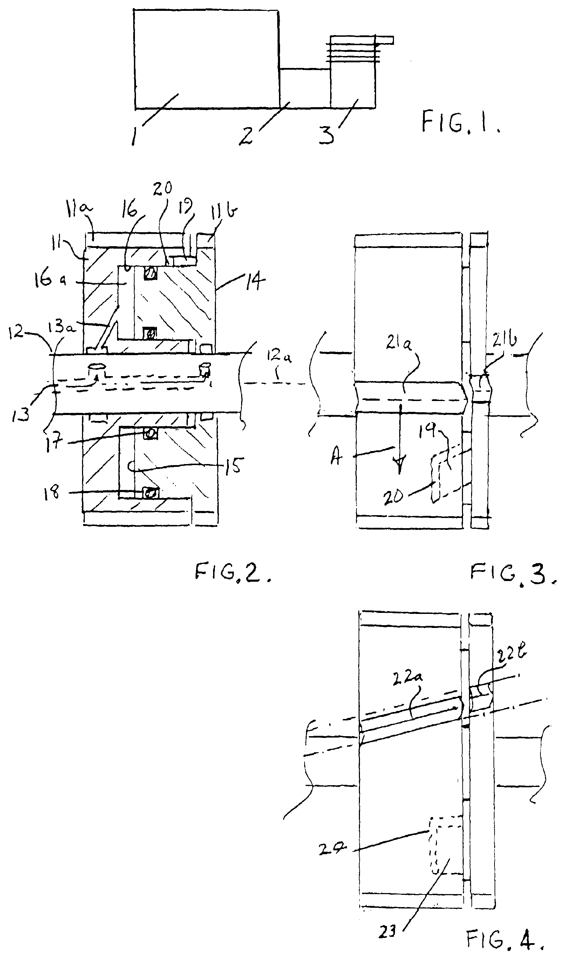

Referring to Fig. 1, a vehicle internal combustion engine 1 carries a gear train 2 through which it drives a single cylinder air compressor 3. The gear train 2 includes at least one plain gear wheel which as illustrated in Fig. 2, comprises a main gear wheel section denoted by reference 11 having gear teeth lla and being rotatable on a supporting spindle 12 provided with a lubrication oil-way 13 fed under pressure from a lubrication oil pump (not shown) of the engine. In addition to the main section 11, the gear wheel also has a shorter ancillary section denoted by reference 14 on a common axis 12a and of which the gear teeth llb are conveniently of substantially identical shape and peripheral dimensions. The ancillary section 14 is arranged to be axially and rotationally movable in a controlled manner on the spindle 12 relative to the main section 11. For this purpose, the ancillary section 14 has an axially aligned annular piston portion 15 which projects into an axially aligned annular cylinder portion 16 of the main section and is provided with respective 0-rings 17 and 18 whereby a pressure chamber 16a is created between walls of the two sections. This pressure chamber 16a is connected via a passage 13a to the lubrication pressure oil-way 13. Furthermore cylindrical internal surface 16 of the auxiliary section 14 is provided with a plurality of equally and symetrically spaced splines or pegs such as 19 which locate in complimentary symetrically spaced helical grooves 20 formed within portion 16 of the main section 1. The helical grooves 20 are angled to enable ancillary piston portion 14 to be rotationally urged by the oil pressure with substantial force oppositely to the drive direction of the main portion 11.

To consider the operation of the gear wheel of Fig. 2 reference may be had to Fig. 3 in which a single peripheral tooth 21a of the main section 11 is indicated alongside a corresponding gear tooth llb of the ancillary section 14. The normal forward drive direction for the gear wheel when installed in the drive train is indicated by the arrow 'A' and with fluid pressure applied from the lubrication oil pump of the engine to the chamber 16a of Fig. 2, the splines 19 and the complimentary spline grooves 20 are angled such as to tend to cause axial and rotational movement of the ancillary section 14 relative to the main section 11. The backs of the gear teeth such as llb are therefore seen to be driven by the hydraulic pressure such as to take up any play which may exist between backs of teeth lla of the main gear wheel section 11 and the teeth of a further gear wheel with which it is meshed, therefore at each cyclic reversal of torque occurring in the gear train, the hydraulic pressure in chamber 16a substantially maintains the close relationship between the gear teeth and otherwise very audible noise due to play between the respective gear wheels is substantially reduced.

Referring to Fig. 4, in the case of the gear wheel being a helical gear wheel, (a single corresponding gear teeth 22a, 22b being again indicated) a plurality of splines or other locating means 23,24 may be provided to constrain relative movement of the ancillary section of the gear wheel relative to the main section to an axial direction under the influence of hydraulic pressure. The angle of the teeth 22a of the gear again causes resultant relative circumferential displacement of the back surface of the teeth 22b of the ancillary section relative to the main section to take up undesired play between the gear wheel and a cooperating helical gear wheel (not shown) and maintains such close relationship between the gear teeth of the gear wheels through torque reversals.

Although not illustrated in the foregoing, in an alternative embodiment of the invention when two sections of a plain gear wheel or a helical gear wheel according to the invention are provided with means for substantially confining relative movement between the main section and the auxiliary section to rotational movement. The biasing means is realised by the auxiliary gear section having a suitable rotary piston arrangement or vanes arrangement acting within a chamber or chambers of the main section. This acts under hydraulic pressure of the lubrication oil to cause rotational displacement of the ancillary section relative to the main section in a direction opposite to the normal forward direction of drive to reduce play between the gear and the adjacent gear of the gear train.

In a further aspect of the invention, the oil path 13a from the lubrication oil-way into and/or out of the pressure chamber of the portion 16 of the gear wheel in Fig. 2 may be chosen along with the effective piston area to provide hydraulic damping between said section to at least partially absorb cyclic reverse torque imposed by a compressor being driven and thereby reduces noise which results from further play through the gear train.

Seals, such as 17 and 18 may be omitted in cases where the bearings provide sufficient sealing to support the necessary internal oil pressures.

Although embodiments of only a single gear wheel of a gear train have been described in the foregoing, it will be understood that in a gear train employing more than two gear wheels alternate gear wheels may be constructed as described with two sections.

Other variations and embodiments of a gear train according to the invention may be appreciated by persons skilled in the art.

## Claims

1. An engine drive compressor arrangement including a reciprocating gas compressor (3), a mechanical drive gear train (2) between the engine (1) and the compressor (3) including a gear wheel having two sections (11,14) with corresponding gear teeth (lla,llb) and being rotatable together about a common axis (12a), biasing means operable to act between said sections in a sense to urge the teeth of one section out of circumferential alignment with the teeth of the other section to reduce play relative to a cooperating gear wheel meshing therewith characterised in that said biasing means comprises an enclosure (16a) formed between walls of said sections and a passage (13,13a) leading to said enclosure via which in operation fluid under pressure is applied to said enclosure (16a).

2. A drive gear train as claimed in claim 1, characterised in that said enclosure (16a) is formed by a piston portion (15) of one said section axially moveable within a cylinder portion (16) of the other said section.

3. A drive gear as claimed in claim 2 characterised in that said piston portion and said cylinder portion are annular.

4. A drive gear train as claimed in claim 1, characterised in that said enclosure is formed by a rotary piston of one said section within a chamber of the other said section.

5. A drive gear train as claimed in claim 1, 2, 3 or 4 characterised in that said gear wheel is a plain gear wheel or an helical gear wheel and said sections have mutual engaging means (19,20; 23,24) whereby relative axial force between them can result in relative rotary motion.

6. A drive gear train as claimed in claim 1, 2 or 3 characterised in that said gear wheel is an helical gear wheel and said sections have mutual engaging means (23,24) whereby relative axial force between them can result in relative axial motion.

7. A drive gear train as claimed in claim 1, 2, 3, 4 or 5 characterised in that said fluid pressure is provided by oil pressure transmitted by pressurised lubrication oil for the gear train.

8. A drive gear as claimed in any of claims 1 to 7 characterised in that a fluid flow into and/or out of said enclosure is restricted to enable said enclosure to provide hydraulic damping between said sections to at least partially absorb cyclic torque reversals.

9. A drive gear substantially as described herein and with reference to Figs. 1, 2, 3 or 4 of the accompanying drawings.
